# EUROPEAN PATENT APPLICATION

(11) **EP 3 714 697 A1**
(43) Date of publication of application: **30.09.2020**
(21) Application number: 20161553.1
(22) Date of filing: 06.03.2020
(51) Int. Cl.: A22C 21/00

(54) **APPARATUS AND METHOD FOR HARVESTING MEAT FROM POULTRY THIGHS**

(30) Priority: 25.03.2019 NL 2022799
(71) Applicant: Meyn Food Processing Technology B.V., 1511 MA Oostzaan (NL)
(72) Inventor: VAN HILLO, Eric Adriaan, 1511 MA Oostzaan (NL); NAGEL, Bas, 1511 MA Oostzaan (NL)
(74) Representative: Van Breda, Jacobus

(57) **Abstract**

Apparatus and method for harvesting meat from poultry thighs in a processing line provided with carriers for poultry legs, wherein each carrier is arranged to convey a poultry leg suspended at its ankle joint, said leg comprising a drumstick, a knee joint and a poultry thigh with a thighbone, and said apparatus comprising a cutter for cutting into the poultry leg, and a scraper for scraping poultry thigh meat from the thighbone, wherein the scraper of the apparatus is arranged to clamp the poultry leg near to its knee joint and fix the knee joint in position, and the cutter is arranged to provide a first cut into the poultry leg while the scraper clamps the poultry leg, and wherein the cutter is arranged to provide the cut adjacent to the scraper and below the knee joint at the height of a knuckle of the thighbone at the side of the knee joint, so as to cut through ligaments that connect the thigh meat to the thighbone.

## Description

The invention relates to an apparatus and method for harvesting meat from poultry thighs.

EP-B-3 157 344 discloses an apparatus and method for harvesting meat from poultry thighs in a processing line provided with carriers for poultry legs, wherein each carrier is arranged to convey a poultry leg suspended at its ankle joint, said leg comprising a drumstick, a knee joint and a poultry thigh with a thighbone. This known apparatus comprises a cutter for cutting into the poultry leg, in particular into the knee-joint, and comprises a scraper for scraping poultry thigh meat from the thighbone. For this purpose the apparatus of EP-B-3 157 344 further applies a pusher to push the thighbone out of the poultry thigh through an aperture of the scraper. The cut that is provided in the knee joint is therefore indispensable, since this enables that the poultry leg is bended, after which bending operation the removal of the bone from the poultry thigh can be executed. All in all the known apparatus is quite a complicated piece of machinery, which is also exemplified by the extensive length of the patent document EP-B-3 157 344.

It is an object of the invention to provide a less complicated apparatus and method for harvesting meat from poultry thighs.

It is also an object of the invention to provide such an apparatus and method, that provides a high yield of meat, which is also of high quality.

It is a further object of the invention to provide such an apparatus and method which is suitable for application in a high rate processing line.

These and other objects and advantages are provided by an apparatus and method according to the invention which has the features of one or more of the appended claims.

The features mentioned in the preamble of claims 1 and 9 are known from US 9,326,527 B2. US 9,326,527 B2 discloses an apparatus and method for harvesting meat from poultry thighs in a processing line provided with carriers for poultry legs, wherein each carrier is arranged to convey a poultry leg suspended at its ankle joint, said leg comprising a drumstick, a knee joint and a poultry thigh with a thighbone. The apparatus further comprises a cutter for cutting into the poultry leg, and a scraper for scraping poultry thigh meat from the thighbone. In the known method and apparatus a step of clamping the poultry leg near to its knee joint is applied to fix the knee joint in position, and to provide a first cut into the poultry leg while the poultry leg is thus clamped in position, wherein the cut is provided below the knee joint at the height of a knuckle of the thighbone which is at the side of the knee joint, so as to cut through tendons that connect the thigh meat to the bone. Further the scraper has at least two scraping modes comprising a first scraping mode and a second scraping mode, wherein the first scraping mode is arranged to execute an initial scraping action on the thighbone below the knee joint, which initial scraping action extends over a predetermined part of the poultry thigh below the knee joint which remains distant from a hip joint of the thighbone.

According to the invention the scraper is arranged to execute the initial scraping mode after releasing the clamping action on the poultry leg.

The cutter is preferably a circumferential cutter to arrange that the cut is approximating a circular cut around the poultry leg. This promotes the subsequent harvesting of the poultry thigh meat.

The apparatus is further preferably provided with a deskinner. Advantageously the deskinner is arranged to become operational after the cutter has provided the cut into the poultry leg below the knee joint at the height of the knuckle of the thighbone at a side of the knee joint.

It is further preferred that the cutter is arranged to provide a second cut into the poultry leg adjacent to the scraper at a predetermined distance from the knee joint. Desirably the second cut is provided into the poultry leg at a pre-determined distance from the knee joint which is farther away from the knee joint than the first cut.

It is preferable that the second cut is provided after completion of the initial scraping mode, wherein the second cut is provided adjacent to the scraper being distant from the hip joint of the thighbone, i.e. in its eventual position reached after completion of the initial scraping mode over the predetermined section of the poultry thigh.

It is preferred that the thigh meat is scraped in a second scraping mode over the entire length of the thighbone, preferably taking place after the second cut.

Advantageously the scraper is arranged to move to a position near to the knee joint prior to executing the second scraping mode of the scraper.

After completion of the second scraping mode the scraped meat is cut loose from the thighbone.

Accordingly the apparatus of the invention is preferably embodied such that the second scraping mode of the scraper is arranged to be operational after the first scraping mode.

Further it is preferred that the scraper is arranged to execute the second scraping mode of the scraper after the cutter has provided the second cut into the poultry leg.

Suitably the scraper is arranged to scrape the thigh meat in the second scraping mode over the entire length of the thighbone.

Suitably further the cutter of the apparatus, or an additional knife of the apparatus is arranged to cut loose the scraped meat from the thighbone.

The invention will hereinafter be further elucidated with reference to a drawing of a non-limiting exemplary embodiment of the apparatus and a method of its use in accordance with the invention.

In the drawing of figures 1 - 9 the subsequent steps of the method of the invention are depicted as executed with a preferred embodiment of the apparatus of the invention, wherein :
- figures 1A and 1B show an apparatus of the invention in a side view and top view, respectively;
- figures 2A - 2C show the apparatus of the invention in a top view showing subsequent steps of operation;
- figure 3 shows the deskinner of the apparatus of the invention;
- figure 4 shows an initial scraping mode of the apparatus of the invention;
- figures 5A and 5B show a second cutting mode of the apparatus of the invention in a side view and top view, respectively;
- figures 6 and 7 show respectively opening and upward moving of the scraper of the apparatus of the invention;
- figure 8 shows a final scraping operation of the scraper of the apparatus of the invention; and
- figure 9 shows cutting loose of the scraped meat that is scraped loose from the thighbone with the apparatus of the invention.

Whenever in the figures the same reference numerals are applied, these numerals refer to the same parts.

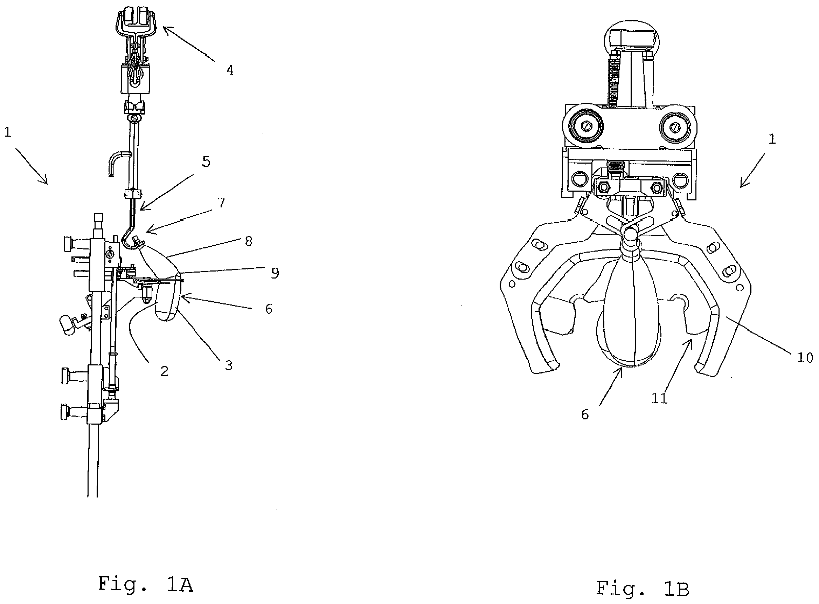

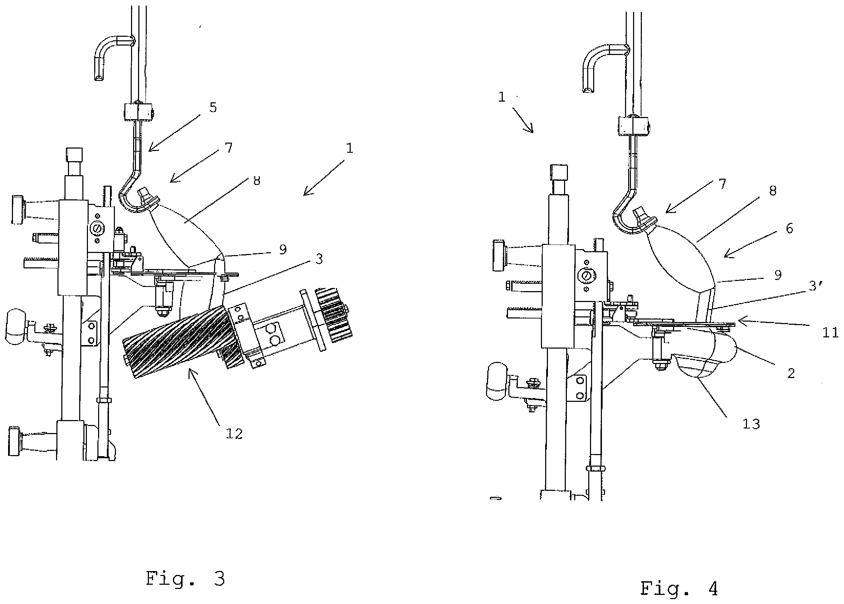

Referring first to figure 1A it shows an apparatus 1 for harvesting meat 2 from poultry thighs 3 in a processing line 4 provided with carriers 5 for poultry legs 6, wherein each carrier 5 is arranged to convey a poultry leg 6 suspended at its ankle joint 7. As the expert (and the layman) knows said poultry leg 6 comprises a drumstick 8, a knee joint 9 and a poultry thigh 3 with a thighbone 3' (the thighbone being visible in for instance figure 4).

Figure 1B shows that the apparatus 1 comprises a cutter 10 for cutting into the poultry leg 6, and a scraper 11 for scraping poultry thigh meat 2 from the thighbone 3'. The cutter 10 is preferably arranged to make a complete or nearly complete circumferential cut into the poultry leg 6.

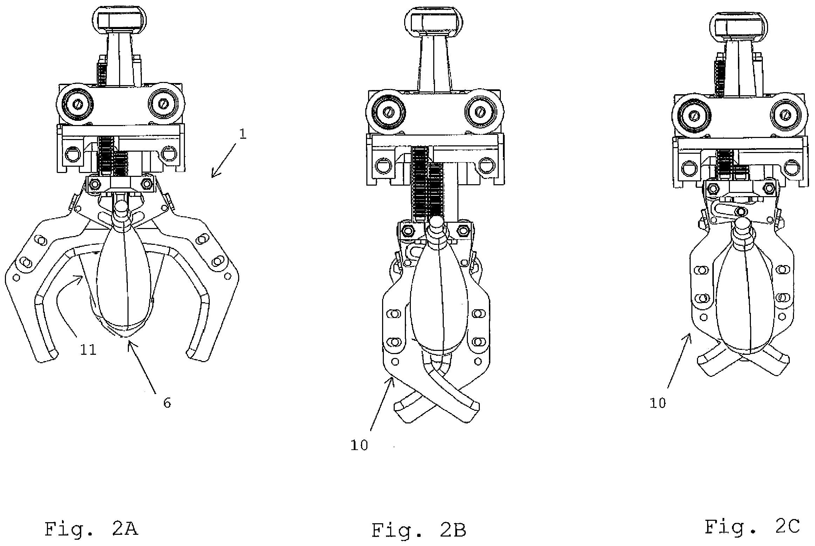

The apparatus 1 can be provided with a separate clamp, however this embodiment is not shown. In the shown embodiment - instead of a separate clamp- the scraper 11 of the apparatus 1 is arranged to clamp the poultry leg 6 near to its knee joint 9 (see figures 1A and 2A) and thus fix the knee joint 9 in position. Figures 2B and 2C show the cutting action following the clamping action on the poultry leg 6, in which the cutter 10 is arranged to subsequently provide a first cut into the poultry leg 6 while the scraper 11 clamps the poultry leg 6 and keeps it in position. The cutter 10 is thus arranged to provide the (approximately circumferential) cut adjacent to the scraper 11 and below the knee joint 9 at the height of a knuckle of the thighbone 3', which knuckle is present at the side of the knee joint 9, so as to cut through tendons that -as the expert knows- connect the thigh meat 2 to the bone.

Figure 3 shows that the apparatus 1 is further provided with a deskinner 12. The deskinner 12 is arranged to become operational after the cutter 10 has provided the first cut into the poultry leg 6 below the knee joint 9 at the height of the knuckle of the thighbone which is present at the side of the knee joint 9, as explained above with reference to figures 2B and 2C.

Figure 4 shows that after deskinning the scraper 11 becomes operational in a first scraping mode, which acts on the thighbone 3' below the knee joint 9, and which initial scraping mode extends over a predetermined section of the poultry thigh 3 below the knee joint 9, wherein the action of the scraping mode remains distant from a hip joint 13 of the thighbone 3'. When a separate clamp is used in addition to the scraper 11, the clamp can remain in position, however in the shown embodiment the scraper 11 is used as a clamp. In that situation it is preferred that the scraper 11 is arranged to execute the initial scraping mode after releasing the clamping action on the poultry leg 6.

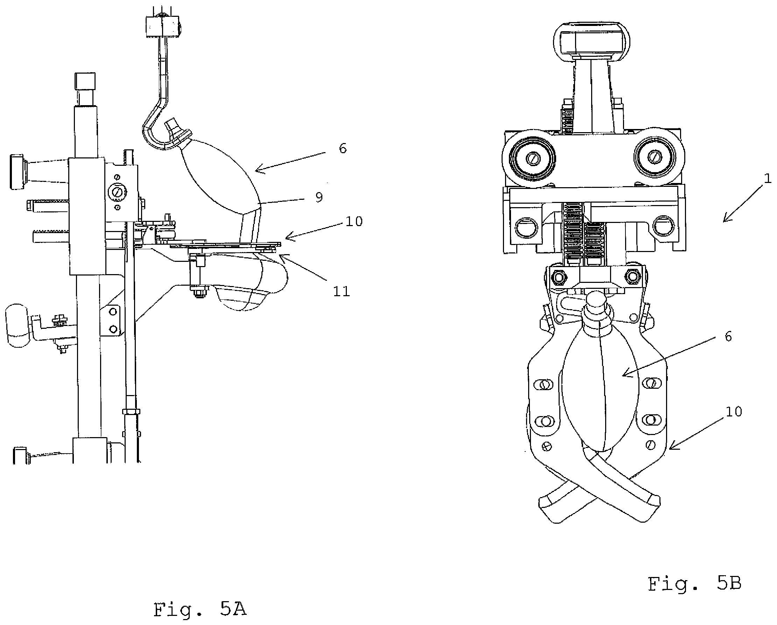

Figure 5A and figure 5B show in side view and top view, respectively that the cutter 10 is arranged to provide a second cut into the poultry leg 6 adjacent to the scraper 11 at a pre-determined distance from the knee joint 9. In the shown embodiment the cutter 10 is arranged to provide the second cut after completion of the initial scraping mode of the scraper 11 which is shown in figure 4. The second cut is then provided adjacent to the scraper 11 still being distant from the hip joint 13 of the thighbone 3' in the eventual position the scraper 11 has reached after completion of the initial scraping mode over the predetermined section of the poultry thigh.

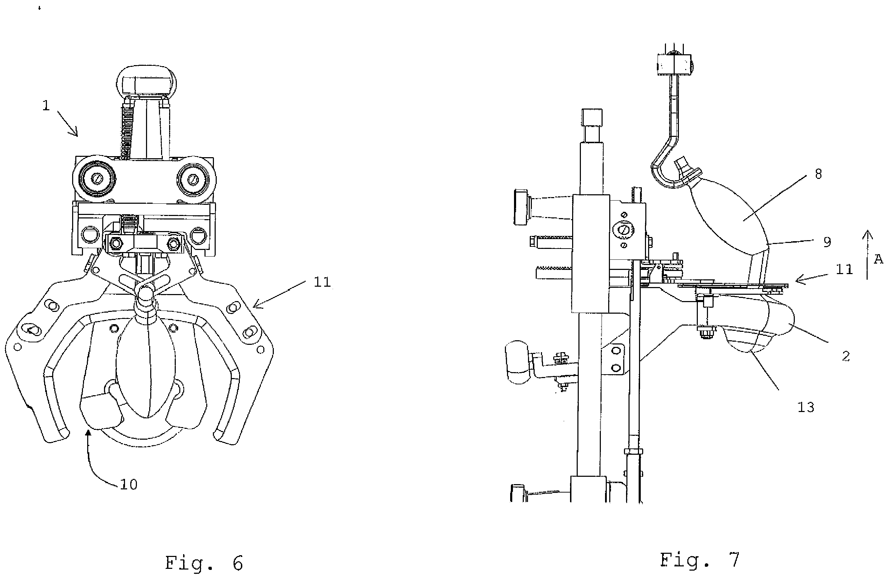

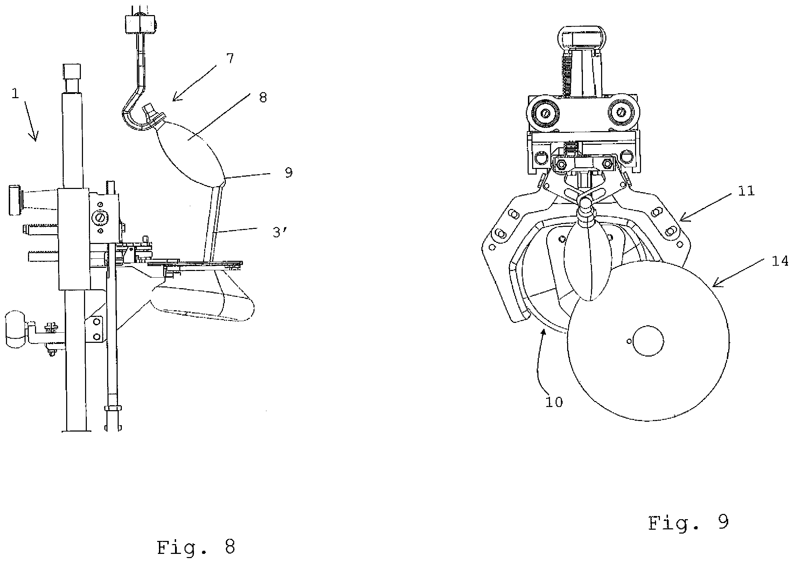

The scraper 11 is further embodied with a second scraping mode which is arranged to be operational after the first scraping mode and after the cutter 10 has provided the second cut into the poultry leg 6 as shown in figure 5A and 5B. The scraper 11 is arranged to then first open and release the poultry leg 6 as is shown in figure 6, and as figure 7 shows to subsequently move upwards according to arrow A to a position near to the knee joint 9 prior to executing the second scraping mode of the scraper 11. Figure 8 then depicts the final scraping mode in which the scraper 11 is arranged to scrape the thigh meat in the second scraping mode over the entire length of the thighbone 3'.

Figure 9 finally shows that after completion of the final scraping mode according to figure 8, a knife 14 of the apparatus 1 is arranged to cut loose the scraped meat from the thighbone 3'. Cutting loose of the meat after the scraping action can also be done by use of the cutter 10.

Although the invention has been discussed in the foregoing with reference to an exemplary embodiment of the method and apparatus of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Features of the invention can be itemized in the following numbered sequence.
1. Apparatus (1) for harvesting meat (2) from poultry thighs (3) in a processing line (4) provided with carriers (5) for poultry legs (6), wherein each carrier (5) is arranged to convey a poultry leg (6) suspended at its ankle joint (7), said poultry leg (6) comprising a drumstick (8), a knee joint (9) and a poultry thigh (3) with a thighbone (3'), and said apparatus (1) comprising a cutter (10) for cutting into the poultry leg (6), and a scraper (11) for scraping poultry thigh meat (2) from the thighbone (3'), wherein the scraper (11) of the apparatus (1) is arranged to clamp the poultry leg (6) near to its knee joint (9) and to fix the knee joint (9) in position, and the cutter (10) is arranged to provide a first cut into the poultry leg (6) while the scraper (11) clamps the poultry leg (6), wherein the cutter (10) is arranged to provide the first cut adjacent to the scraper (11) and below the knee joint (9) at the height of a knuckle of the thighbone (3') closest to the knee joint (9), so as to cut through tendons that connect the thigh meat (2) to the thighbone (3').
2. Apparatus according to clause 1, wherein the apparatus is provided with a deskinner (12).
3. Apparatus according to clause 2, wherein the deskinner (12) is arranged to become operational after the cutter (10) has provided the first cut into the poultry leg (6).
4. Apparatus according to any one of clauses 1 - 3, wherein the scraper (11) is provided with at least two scraping modes comprising a first scraping mode and a second scraping mode, wherein the first scraping mode is arranged to execute an initial scraping mode on the thighbone (3') below the knee joint (9), which initial scraping mode extends over a predetermined section of the poultry thigh below the knee joint (9) which remains distant from a hip joint (13) of the thighbone (3').
5. Apparatus according to clause 4, wherein the initial scraping mode is arranged to start at the position of the first cut.
6. Apparatus according to clause 4 or 5, wherein the scraper (11) is arranged to execute the initial scraping mode after releasing the clamping mode on the poultry leg (6).
7. Apparatus according to any one of clauses 1 - 6, wherein the cutter (10) is arranged to provide a second cut into the poultry leg (6) adjacent to the scraper (11) at a pre-determined distance from the knee joint (9).
8. Apparatus according to clauses 7, wherein the cutter (10) is arranged to provide the second cut after completion of the initial scraping mode of the scraper (11), wherein the second cut is provided adjacent to the scraper (11) being distant from the hip joint (13) of the thighbone (3') in its eventual position reached after completion of the initial scraping mode over the predetermined section of the poultry thigh.
9. Apparatus according to any one of clauses 4 - 8, wherein the second scraping mode of the scraper (11) is arranged to be operational after the first scraping mode.
10. Apparatus according to clause 9, wherein the scraper (11) is arranged to scrape the thigh meat (2) in the second scraping mode over the entire length of the thighbone (3').
11. Apparatus according to clause 7 or 8 and clause 9 or 10, wherein the second scraping mode of the scraper (11) is initiated after the cutter (10) has provided the second cut into the poultry leg (6).
12. Apparatus according to any one of clauses 9 - 11, wherein the scraper (11) is arranged to move to a position near to the knee joint (9) prior to executing the second scraping mode of the scraper (11).
13. Apparatus according to any one of clauses 1 - 12, wherein the cutter (10) of the apparatus, or an additional knife (14) of the apparatus is arranged to cut loose the scraped meat (2) from the thighbone (3').
14. Method for harvesting meat from poultry thighs (3) in a processing line (4), wherein poultry legs (6) are conveyed while being suspended at their ankle joints (7), each of said poultry legs (6) comprising a drumstick (8), a knee joint (9) and a poultry thigh (3) with a thighbone (3'), which method comprises cutting into the poultry leg (6), and scraping of poultry thigh meat (2) from the thighbone (3') by a scraper (11), characterized by a step of clamping the poultry leg (6) by the scraper near to its knee joint (9) to fix the knee joint (9) in position, and providing a first cut into the poultry leg (6) while the poultry leg (6) is thus clamped in position, wherein the cut is provided below the knee joint (9) at the height of a knuckle of the thighbone (3') which is present at a side of the knee joint (9), so as to cut through tendons that connect the thigh meat (2) to the thighbone (3').
15. Method according to clause 14, wherein the poultry thigh (3) is deskinned.
16. Method according to clause 15, wherein deskinning is done after providing the cut into the poultry leg (60 below the knee joint (9) at the height of the knuckle of the thighbone (3') at the side of the knee joint (9).
17. Method according to any one of clauses 14 - 16, wherein an action of an initial scraping mode is executed on the thighbone (3') below the knee joint (9), which initial scraping mode extends over a predetermined part of the poultry thigh (3) below the knee joint (9) which remains distant from a hip joint (13) of the thighbone (3').
18. Method according to any one of clauses 14 - 17, wherein a second cut is provided into the poultry leg (6) at a pre-determined distance from the knee joint (9) which is farther away from the knee joint (9) than the first cut.
19. Method according to clauses 17 and 18, wherein the second cut is provided after completion of the initial scraping mode.
20. Method according to any one of clauses 14 - 19, wherein the thigh meat (2) is scraped in a second scraping mode over the entire length of the thighbone (3').
21. Method according to any one of clauses 18 - 21, wherein the second scraping mode is initiated after providing the second cut into the poultry leg (6).
22. Method according to any one of clauses 14 - 21, wherein after completion of the second scraping mode the scraped meat (2) is cut loose from the thighbone (3').

### List of reference numerals

- 1.: apparatus
- 2.: meat
- 3.: poultry thigh - 3'. thighbone
- 4.: processing line
- 5.: carrier
- 6.: poultry leg
- 7.: ankle joint
- 8.: drumstick
- 9.: knee-joint
- 10.: cutter
- 11.: scraper
- 12.: deskinner
- 13.: hip joint
- 14.: knife

## Claims

1. Apparatus (1) for harvesting meat (2) from poultry thighs (3) in a processing line (4) provided with carriers (5) for poultry legs (6), wherein each carrier (5) is arranged to convey a poultry leg (6) suspended at its ankle joint (7), said poultry leg (6) comprising a drumstick (8), a knee joint (9) and a poultry thigh (3) with a thighbone (3'), and said apparatus (1) comprising a cutter (10) for cutting into the poultry leg (6), and a scraper (11) for scraping poultry thigh meat (2) from the thighbone (3'), wherein the scraper (11) of the apparatus (1) is arranged to clamp the poultry leg (6) near to its knee joint (9) and to fix the knee joint (9) in position, and the cutter (10) is arranged to provide a first cut into the poultry leg (6) while the scraper (11) clamps the poultry leg (6), wherein the cutter (10) is arranged to provide the first cut adjacent to the scraper (11) and below the knee joint (9) at the height of a knuckle of the thighbone (3') closest to the knee joint (9), so as to cut through tendons that connect the thigh meat (2) to the thighbone (3'), wherein the scraper (11) is provided with at least two scraping modes comprising a first scraping mode and a second scraping mode, wherein the first scraping mode is arranged to execute an initial scraping mode on the thighbone (3') below the knee joint (9), which initial scraping mode extends over a predetermined section of the poultry thigh below the knee joint (9) which remains distant from a hip joint (13) of the thighbone (3'), and wherein preferably the initial scraping mode is arranged to start at the position of the first cut, **characterized in that** the scraper (11) is arranged to execute the initial scraping mode after releasing the clamping mode on the poultry leg (6).

2. Apparatus according to claim 1, **characterized in that** the apparatus is provided with a deskinner (12).

3. Apparatus according to claim 2, **characterized in that** the deskinner (12) is arranged to become operational after the cutter (10) has provided the first cut into the poultry leg (6) .

4. Apparatus according to any one of claims 1 - 3, **characterized in that** the cutter (10) is arranged to provide a second cut into the poultry leg (6) adjacent to the scraper (11) at a predetermined distance from the knee joint (9).

5. Apparatus according to claims 4, **characterized in that** the cutter (10) is arranged to provide the second cut after completion of the initial scraping mode of the scraper (11), wherein the second cut is provided adjacent to the scraper (11) being distant from the hip joint (13) of the thighbone (3') in its eventual position reached after completion of the initial scraping mode over the predetermined section of the poultry thigh.

6. Apparatus according to any one of claims 1 - 5, **characterized in that** the second scraping mode of the scraper (11) is arranged to be operational after the first scraping mode and preferably after the cutter (10) has provided the second cut into the poultry leg (6).

7. Apparatus according to claim 6, **characterized in that** the scraper (11) is arranged to scrape the thigh meat (2) in the second scraping mode over the entire length of the thighbone (3').

8. Apparatus according to any one of claims 6 - 7, **characterized in that** the scraper (11) is arranged to move to a position near to the knee joint (9) prior to executing the second scraping mode of the scraper (11).

9. Method for harvesting meat from poultry thighs (3) in a processing line (4), wherein poultry legs (6) are conveyed while being suspended at their ankle joints (7), each of said poultry legs (6) comprising a drumstick (8), a knee joint (9) and a poultry thigh (3) with a thighbone (3'), which method comprises cutting into the poultry leg (6), and scraping of poultry thigh meat (2) from the thighbone (3') by a scraper (11), wherein a step of clamping the poultry leg (6) by the scraper near to its knee joint (9) to fix the knee joint (9) in position, and providing a first cut into the poultry leg (6) while the poultry leg (6) is thus clamped in position, wherein the cut is provided below the knee joint (9) at the height of a knuckle of the thighbone (3') which is present at a side of the knee joint (9), so as to cut through tendons that connect the thigh meat (2) to the thighbone (3'), wherein an initial scraping mode is executed on the thighbone (3') below the knee joint (9), which initial scraping mode extends over a predetermined part of the poultry thigh (3) below the knee joint (9) which remains distant from a hip joint (13) of the thighbone (3'), **characterized in that** the initial scraping mode is executed after releasing the clamping mode on the poultry leg (6).

10. Method according to claim 9, **characterized in that** the poultry thigh (3) is deskinned.

11. Method according to claim 10, **characterized in that** deskinning is done after providing the cut into the poultry leg (60 below the knee joint (9) at the height of the knuckle of the thighbone (3') at the side of the knee joint (9) .

12. Method according to any one of claims 9 - 11, **characterized in that** a second cut is provided into the poultry leg (6) at a predetermined distance from the knee joint (9) which is farther away from the knee joint (9) than the first cut.

13. Method according to claims 9 and 12, **characterized in that** the second cut is provided after completion of the initial scraping mode.

14. Method according to any one of claims 9 - 13, **characterized in that** the thigh meat (2) is scraped in a second scraping mode over the entire length of the thighbone (3').

15. Method according to any one of claims 14, **characterized in that** the second scraping mode is initiated after providing the second cut into the poultry leg (6).
